(19) Europäisches Patentamt
European Patent Office
Office européen des brevets

(11) **EP 3 817 550 B1**

(12) **EUROPEAN PATENT SPECIFICATION**

(45) Date of publication and mention of the grant of the patent:
**12.08.2026 Bulletin 2026/33**

(21) Application number: **19831074.0**

(22) Date of filing: **05.07.2019**

(51) International Patent Classification (IPC):
***A01N 25/10*** *(2006.01)* ***A61K 33/30*** *(2006.01)*
***A01P 1/00*** *(2006.01)* ***A01N 59/16*** *(2006.01)*
***A01N 59/20*** *(2006.01)* ***A01N 37/02*** *(2006.01)*

(52) Cooperative Patent Classification (CPC):
(C-Sets available)
**A01P 1/00; A01N 37/02; A01N 37/10; A01N 59/00; A01N 59/16; A01N 59/20** (Cont.)

(86) International application number:
**PCT/IN2019/050499**

(87) International publication number:
**WO 2020/008479 (09.01.2020 Gazette 2020/02)**

(54) **NOVEL ORGANO METALO COMPOSITION FOR AGRICULTURE APPLICATION**
NEUARTIGE ORGANO-METALLZUSAMMENSETZUNG FÜR DIE LANDWIRTSCHAFT
NOUVELLE COMPOSITION ORGANO-MÉTALLIQUE POUR APPLICATION AGRICOLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.07.2018 IN 201841024443**

(43) Date of publication of application:
**12.05.2021 Bulletin 2021/19**

(73) Proprietor: **Fertis India Pvt. Ltd.**
**Hyderabad Telangana 500082 (IN)**

(72) Inventor: **KANUMURU, Rahul Raju**
**Hyderabad, Telangana 500033 (IN)**

(74) Representative: **HGF**
**HGF Limited**
**4th Floor, 1 City Square**
**Leeds LS1 2ES (GB)**

(56) References cited:
**EP-A1- 2 870 200**
**WO-A1-2016/201512**
**WO-A1-2017/121019**
**US-A- 5 984 997**
**US-A1- 2015 258 057**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**A01N 37/02, A01N 37/10, A01N 59/00, A01N 59/26;**
**A01N 37/10, A01N 59/00, A01N 59/26;**
**A01N 59/00, A01N 59/26;**
**A01N 59/16, A01N 37/02, A01N 37/10, A01N 59/00, A01N 59/16, A01N 59/26;**
**A01N 59/20, A01N 37/02, A01N 37/10, A01N 59/00, A01N 59/16, A01N 59/26**

## Description

### TECHNICAL FIELD OF THE INVENTION:

The present invention relates to a composition comprising a novel combination of Oragnometalo compounds with specific antimicrobial and antioxidant property for agricultural and non-agricultural applications. More particularly, the present invention relates to organometalo composition comprising Zinc octoate and copper octoates with weight ratio of 1:1

### BACKGROUND AND PRIOR ART OF THE INVENTION:

Earlier organo metal complexes such as zinc octoates are reported to be used as hydrogen sulfide scavengers. Petroleum asphalt is produced as a residue of a thermal separation refinery process as per the teachings of European Patent Publication No. 0121377 and 000 421 683 A1.

US5000835 describes use of oil soluble metal carboxylates as hydrogen sulphide scavengers. This patent describes the reaction between $H_2S$ and metal carboxylates with 6 to 24 carbon atoms. In these metal carboxylates, the carbonyl group functions as a carrier for the oppositely charged metal and places the metal into a form which is soluble in an organic environment and able to make contact with dissolved hydrogen sulfide. When the metal in the metal carboxylates reacts with dissolved hydrogen sulfide, the two forms an insoluble metal sulfide, which eliminates the toxic and corrosive properties of the hydrogen sulfide.

The organo metallic complexes of Arsenic, Antimony and Bismuth reported to be used as pesticides from early 60's (Agricultural and Biocidal Applications of Organometalics. Richard J. Daum. M&T Chemicals, Inc., Research laboratory, Rahway, N.J). US 2015/258057 teaches the microbicidal properties of Zn carboxylates and of Cu carboxylates. WO 2016/201512 teaches that Zn octoate and Cu octoate are antifungal agents.

### SUMMARY OF THE INVENTION:

The present invention discloses a organometalo composition comprising novel combination of organo metal compounds having antimicrobial and antioxidant property for agriculture and non-agriculture applications with a specific ratio of 1:1 by weight Zinc octoate and copper octoates.

### DESCRIPTION OF DRAWINGS:

Figure 1 shows 3M (enterobactereaceae) plates test for various pronos initially.
Figure 2 shows 3M (enterobactereaceae) plates test for various pronos after 24 hrs.
Figure 3 shows3M (enterobactereaceae) plates test for various pronos after 48 hrs.

### DETAILED DESCRIPTION OF INVENTION:

The invention will now be described in detail in connection with certain preferred and optional embodiments, so that various aspects thereof may be fully understood and appreciated.

Accordingly, the present invention provides a composition comprising combination of one or more oragnometalo compounds with specific antimicrobial and antioxidant property for agricultural and non-agricultural applications.

In a specific embodiment, the organometalo compounds of the present invention comprises Zinc octoate and copper octoates with a weight ratio of 1:1.

In another embodiment, the other organometalo compounds are selected from the group consisting of silicates, phosphate/phosphites and benzoates of Zinc and copper.

In another preferred embodiment, the oragnometalo composition optionally comprises trace metals selected from iron, manganese, magnesium, ammonium, calcium, potassium, boron, molybdenum; non-metals such as nitrogen, phosphorous, sulphur and organic moieties such as acetates, propionates, benzoates, gallates etc, to improve plant resistance to reduce plant efficacy disorders or symptoms thereof mediated by such metallo enzymes.

Accordingly, in another preferred embodiment, the present invention provides a composition of Zinc and Copper octoates optionally with Iron and Manganese to activate Super Oxide Dismutage-(SOD) thereby providing methods of treating diseases, disorders or symptoms thereof mediated by such metallo enzymes.

In another preferred embodiment, the present invention provides a composition of Zinc and Copper octoates optionally with Benzoates, acetates, gallates and propionates of metals to improve plant resistance to reduce plant efficacy

disorders or symptoms thereof mediated by such metallo enzymes.

In yet another preferred embodiment, the present invention provides a composition of Zinc and Copper octoates alongwith silicates and Phosphates/phosphites.

Accordingly, in another preferred embodiment, the present invention provides the composition of Zinc and Copper octoates with silicates and Phosphates with Silicates: Phosphates: octoates having ratios of 5:3:2 to improve plant resistance to disorders or symptoms thereof.

In another embodiment, the composition of the present invention comprises the combination of Zinc and copper silicates, Phosphites and octoates in the ratio of 5: 3:2 to improve plant resistance to disorders or symptoms thereof.

In yet another embodiment, the composition of the present invention the combination of Zinc and copper silicates, Phosphates, phosphites and octoates in the ratio of 5: 1.5: 1.5: 2 to improve plant resistance to disorders or symptoms thereof.

In a further embodiment, the composition comprises the combination of Zinc and copper silicates, Phosphates, octoates and benzoates in the ratio of 5: 3: 1: 1 to improve plant resistance to disorders or symptoms thereof.

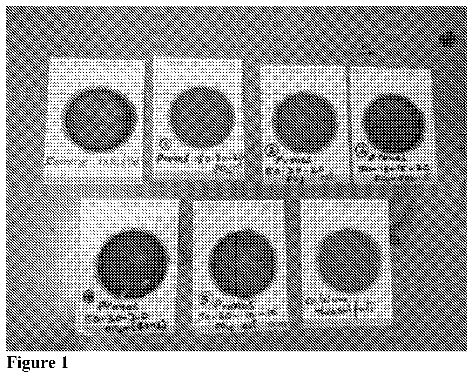

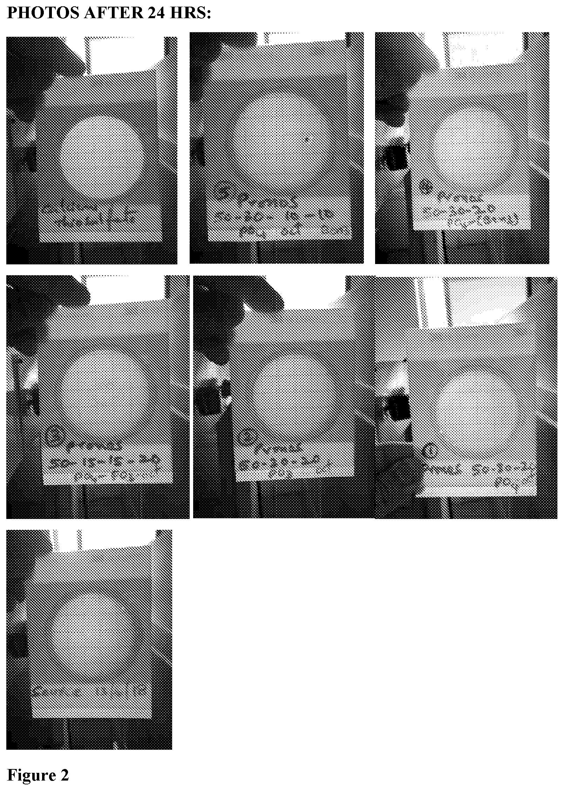

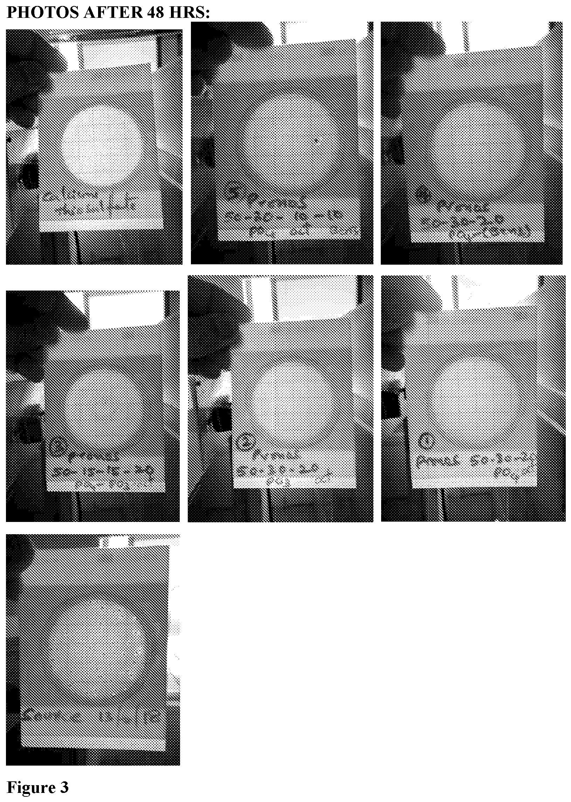

In yet another embodiment, the present invention has demonstrated the anti-microbial property of the organo-metalo compositions of the present invention. The use of copper and zinc octoates even in 10% in the composition also effectively ingibits the growth of the mycobacteriumenterobacteria and E-coli, as shown in table 3 and figures 1 to 3, indicating that the claimed compositions can be used as foliar application for the treatement of bacterial and funagl deseases from the plants. Other features and embodiments of the invention will become apparent by the following examples which are given only for the purpose of illustration of the invention rather than limiting its intended scope. Various changes and modifications to the disclosed embodiments will be apparent to those skilled in the art.

## EXAMPLES

### Example-1:

Oraganometalo compositions comprising Zinc and Copper Octoates with Metal silicates and Metal phosphates in a specific ratio in 5:3:2 ratio is shown in table 1 below.

**Table 1** (first two rows are not covered by the present claims)

| COMPOSITION | WEIGHT IN G | THEORITICAL %Zn & % Cu |
|---|---|---|
| Zinc and Copper silicates in 1:1 | 50 G | EACH 3 % |
| Zinc and Copper Phosphates in 1:1 | 30 G | EACH 6 % |
| Zinc and Copper Octoates in 1:1 | 20 G | EACH 2 % |

### Example-2: (not covered by the present claims)

Composition comprising Zinc and Copper Octoates with silicates and Phosphates and with or without Iron and Manganese alongwith specific ratio of Nitrogen, Phosphorous and Potassium having ratios of 5:3:2 and with Trace elements, as shown in table 2, to improve plant resistance to disorders or symptoms thereof.

**Table 2**

| ORGANOMETALLIC COMPOUND ALONG WITH NPK | | | |
|---|---|---|---|
| s.no | Name of raw material | Chilli | Vegetable grades (brinjal, okra, cabbage, cauliflower, beans,gaurds) |
| | | Chilli flowering 7-3-23 | Fruit development and maturity 8-2-27 |
| | | Weight in grams | Weight in grams |
| 1 | SILICATES | 100 | 100 |
| 2 | PHOSPHATES | 60 | 60 |
| 3 | OCTOATES | 40 | 40 |

(continued)

| ORGANOMETALLIC COMPOUND ALONG WITH NPK | | | |
|---|---|---|---|
| s.no | Name of raw material | Chilli | Vegetable grades (brinjal, okra, cabbage, cauliflower, beans,gaurds) |
| | | Chilli flowering 7-3-23 | Fruit development and maturity 8-2-27 |
| | | Weight in grams | Weight in grams |
| 4 | UREA | 22 | 50 |
| 5 | KNO3 13-0-45 | 511 | 444 |
| 6 | SOP 00-00-50(Sulphate of potash) | 0 | 0 |
| 7 | MAP(Monoammonium phosphate) | 0 | 0 |
| 8 | MKP(Mono Potassium Phosphate) | 0 | 0 |
| 9 | Ca- PROPIONATE | 33.3 | 33.3 |
| 10 | Ca-ACETATE | 33.3 | 33.3 |
| 11 | Ca-PHOSPHATE (HAP) | 33.3 | 33.3 |
| 12 | BOROVIN | 120 | 120 |
| 13 | MgSO4 anhydrous | 13 | 26 |
| 14 | MnSO4.H2O | 28 | 0 |
| 15 | FeSO4.7H2O | 0 | 0 |
| 16 | BORIC ACID | 0 | 0 |
| 17 | Fe-EDTA | 0 | 10 |
| 18 | Mn-EDTA | 0 | 40 |
| 19 | AMMONIUM MOLYBDATE | 0 | 0.02 |
| 20 | ANTI CAKING | 6 | 10 |
| **TOTAL** | | **1000** | **1000** |

**Example 3:**

The anti-microbial property of the organometalo compositions of the present invention is demonstrated in the below table 3 and shown in figures 1 to 3. The use of combination of copper and zinc octoates(1:1) even in 10% in the compositions of copper and zinc (1:1) silicates, phosphates, phosphites and benzoates, effectively inhibits the growth of the enterobacteria and E-coli, when compared to silicates, phosphates, phosphites and benzoates alone or their combinations. Therefore, the combination of copper and zinc octoates (1:1) even in 10% in the compositions of silicates, phosphates, phosphites and benzoates effectively inhibits the growth of the enterobacteria and E-coli, when compared to the compositions that are devoid of octoates as demonstrated in table 3 below.

**Table 3:**

| **3M (ENTEROBACTEREACEAE) PLATES TEST FOR VARIOUS PRONOS** (S.NOs. 4 and 6-11 not covered by the present claims) | | | |
|---|---|---|---|
| **S.NO** | **DESCRIPTION with Ratios of** SILICATES-PHOSPHATES-OCTOATES | **DILUTION FOR 3 M** | **% of Anti microbial property** |
| 1 | **50-30-20** SILICATES-PHOSPHATES-OCTOATES(PRONOS-1) | 1G/LIT | 100 % |
| 2 | **50-30-20** SILICATES-PHOSPHITES -OCTOATES(PRONOS-2) | 1G/LIT | 100 % |

(continued)

| **3M (ENTEROBACTEREACEAE) PLATES TEST FOR VARIOUS PRONOS** (S.NOs. 4 and 6-11 not covered by the present claims) | | | |
|---|---|---|---|
| **S.NO** | **DESCRIPTION with Ratios of** SILICATES-PHOSPHATES-OCTOATES | **DILUTION FOR 3 M** | **% of Anti microbial property** |
| 3 | **50-15-15-20** SILICATES-PHOSPHATES-PHOSPHITES-OCTOATES(PRONOS-3) | 1G/LIT | 100 % |
| 4 | **50-30-20** SILICATES-PHOSPHATES-BENZOATES(PRONOS-4) | 1G/LIT | 90 % |
| 5 | **50-30-10-10** SILICATES-PHOSPHATES-OCTOATES-BENZOATES(PRONOS-5) | 1G/LIT | 100 % |
| 6 | COPPER AND ZINC SILICATES -50-50 (1:1) | 1G/LIT | 80% |
| 7 | COPPER AND ZINC PHOSPHATES-50-50 (1:1) | 1G/LIT | NIL |
| 8 | COPPER AND ZINC PHOSPHITES-50-50 (1:1) | 1G/LIT | NIL |
| 9. | COPPER AND ZINC BENZOATES - 50-50 (1:1) | 1G/LIT | 80% |
| 10. | COPPER OCTOATE-100 | 1G/LIT | 70% |
| 11. | ZINC OCTOATE-100 | 1G/LIT | 60% |
| 12 | COPPER AND ZINC OCTOATE-50-50 (1:1) | 1G/LIT | 100% |

**Procedure:**

Various formulation(Pronos) as referred above in table 3 was prepared by dissolving 1gm of the formulation in one litre of contaminated water containing Ecoli or Enterobactereacea. The samples were placed on the 3M plates(3M Petrifilm Enterobacteriaceae Count Plate) and incubated all the plates for 24 hours period. After 24 hours a clear indication of Anti-Microbial property was observed from the color change in the 3M paltes.

Each 3M -Plate have self-indicated with selected Media for Ecoli and Entero bacteacea. These 3M Petrifilm Enterobacteriaceae Count Plate is a sample-ready-culture medium system that contains modified Violet Red Bile Glucose (VRBG) nutrients, a cold-watersoluble gelling agent, and a tetrazolium indicator that facilitates colony enumeration. 3M Petrifilm Enterobacteriaceae Count Plates are used for the enumeration of Enterobacteriaceae in the food, beverage and bottled water industries. Enterobacteriaceae are oxidase-negative, Gram-negative rods that ferment glucose to produce acid and/or gas. Enterobacteriaceae colonies will appear as red colonies associated with yellow zones, red colonies associated with gas bubbles, red colonies associated with yellow zones and with gas bubbles (source: 3M Petrifilm™).

**Color Indication plate for Microbial species:**

3M-Plate-Violet color for Entero Bactreacea
3-M Plate-Pink color for E-COLI

As the count of the Enterobacteriaceae increases, the color of the gel lightens from violet to yellow or cream colored. Similarly, As the count of the e-coli increases, the color of the gel lightens from dark pink to light pink colored.

**Results:**

Above all formulations containing copper and zinc octoate(1:1) gives clear indication of 100 % Anti microbial property against Enterobacteriaceae and E. Coli.

Based on the above results the claimed compositions can be used as foliar application in agriculture fileds for the treatment of bacterial and funagl deseases from the plants like phytopathogens are tested and found its controlled.

**Example 4:** SAMPL .NOs. 2-8 and 10-11 not covered by the present claims)

Example 4, illustrates various formulation prepared using octoates of zinc and copper along with phosphates, silicates, benzoates, propionates and NPK, for agricultural applications as provided under tables 4 to 10.

**Table 4**

| DATE | 19-1-2018 | | | |
|---|---|---|---|---|
| SAMPLE NO | COMPOSITION | PER ACRE DOSE | | |
| SAMPLE-1 | | 1-A | 1-B | |
| | zinc Octoate | 0.5 G | 1 G | |
| | copper Octoate | 0.5 G | 1 G | |
| SAMPLE-2 | | 2-A | 2-B | |
| | copper Octoate | 1 G | 2 G | |
| SAMPLE-3 | (CS+CP)=100 g/Acre with copper Octoate 1 g | | | |
| SAMPLE-4 | (CS+CP)=200 g/Acre with copper Octoate 1 g | | | |
| SAMPLE-5 | (CS+CP)=100 g/Acre with zinc Octoate 1 g | | | |
| SAMPLE-6 | (CS+CP)=200 g/Acre with zinc Octoate 1 g | | | |
| SAMPLE-7 | zinc phosphate + zinc silicate = 100 g/acre | | | |
| SAMPLE-8 | zinc phosphate + zinc silicate = 200 g/acre | | | |
| SAMPLE-9 | | 9-A | 9-B | 9-C |
| | CS+ZS | 50 g | 50 g | 125 g |
| | CP+ZP | 50 g | 50 g | 75 g |
| | copper Octoate | 0.5 g | 1 g | 0.5 g |
| | zinc Octoate | 0.5 g | 1 g | 0.5 g |
| SAMPLE-10 | CS+CP (1:1) | | | |
| SAMPLE-11 | SUCROSE Octoate LIQUID | Insect & Microbes | | |

CP: Calcium Phosphate; ZP: Zinc phosphate; ZS: Zinc silicate; CS: Calcium silicate

**Table 5:** (not covered by the present claims)

Various combinations of copper and zinc silicates, phosphates and octoates are prepared and provided below as samples 12 to 15 as above in table 5.

| DATE 02-02-2018 | | | | | |
|---|---|---|---|---|---|
| | 1:1 silicates | 1:1 phosphates | Zn-Octonate | Cu-Octonate | Sample weight |
| SAMPLE -12 60-40-10 | 2.72 | 1.82 | 0.46 | 0 | 5 G |
| SAMPLE -13 60-40-10 | 2.72 | 1.82 | 0 | 0.46 | 5 G |
| SAMPLE -14 50-30-20 | 2.5 | 1.5 | 1 | 0 | 5 G |
| SAMPLE -15 50-30-20 | 2.5 | 1.5 | 0 | 1 | 5 G |

**Table 6:**

Table 6 shows various combinations of Zn and Cu Octoates along with P2O5.

(only samples 9A-9C, 17 and the highlighted "sample-1 (1:1)" are according to the present claims )

| CONTENTS | | | | |
|---|---|---|---|---|
| **Sample code** | **% Zn** | **% Cu** | **% $P_2O_5$** | **% Zn+Cu Octoates** |
| sample-1 | 11 | 10 | 0 | 100 |
| sample-2 | 0 | 20 | 0 | 100 |
| sample-3 | 0 | 26.2 | 18 | 0+1 |
| sample-4 | 0 | 26.1 | 18 | 0+1 |
| sample-5 | 0.2 | 26 | 18 | 1+0 |
| sample-6 | 0.1 | 26 | 18 | 0.5+0 |
| sample-7 | 26 | 0 | 18 | 0 |
| sample-9A | 13.1 | 13.1 | 18 | 0.5+0.5 |
| sample-9B | 13.2 | 13.2 | 18 | 1+1 |
| sample-9C | 11 | 11 | 13.5 | 0.25+0.25 |
| sample-10 | 0 | 26 | 18 | 0 |
| sample-11 | | | | 100 |
| sample-12 | 12.54 | 10.54 | 13 | 9+0 |

| | | | | |
|---|---|---|---|---|
| sample-13 | 10.54 | 12.54 | 13 | 0+9 |
| sample-14 | 13.4 | 9 | 10.8 | 20+0 |
| sample-15 | 9 | 13.4 | 10.8 | 0+20 |
| sample-1(1:1 Zn Octoate + Copper Octoate) | 11 | 10 | 0 | |
| sample-2 (Copper Octoate) | 0 | 20 | 0 | |
| SAMPLE-16 (60-40-10) | 10.54 | 12.54 | 13 | 0.9+0.9 |
| SAMPLE-17 (50-30-20) | 9 | 9 | 10.8 | 1.8+1.8 |

**Table 7:** Table 7 shows various combinations of Zn and Cu silicates, phosphates and Octoates. (samples 2 and 16 not covered by the present claims)

| | 1:1 silicates | 1:1 phosphates | Zn-Octoate | Cu-Octoate | Sample weight |
|---|---|---|---|---|---|
| sample-1 (1:1 Zn Octoate + Copper Octoate) | **0** | **0** | **50** | **50** | **100** |
| sample-2 (Copper Octoate) | **0** | **0** | **0** | **100** | **100** |
| **SAMPLE-16** (60-40-10) | 54.4 | 36.4 | 4.6 | 4.6 | 100 |
| **SAMPLE-17** (50-30-20) | 50 | 30 | 10 | 10 | 100 |

**Table 8**: (only samples 1 and 9A-9C are according to the present claims )

| **Table 8** shows various compositions of zinc octoate, copper octoate without Zinc/copper Phosphate and Zinc/copper Silicates either alone or in combination thereof. | | | | |
|---|---|---|---|---|
| | **PER ACRE DOSE** | | | |
| **S NO** | **Composition** | **1-A** | **1-B** | |
| Sample -1 | Zinc Octoate | 0.5 gm | 1 gm | |
| | Copper Octoate | 0.5 gm | 1 gm | |
| | | **2-A** | **2-B** | |
| Sample -2 | Copper Octoate | 1 gm | 2 gm | |
| Sample -3 | (CS + CP) = 100 gm / acre with Copper Octoate 1 gm | | | |
| Sample -4 | (CS + CP) = 200 gm / acre with Copper Octoate 1 gm | | | |
| Sample -5 | (CS + CP) = 100 gm / acre with Zinc Octoate 1 gm | | | |
| Sample -6 | (CS + CP) = 200 gm / acre with Zinc Octoate 1 gm | | | |

(continued)

| Table 8 shows various compositions of zinc octoate, copper octoate without Zinc/copper Phosphate and Zinc/copper Silicates either alone or in combination thereof. | | | | |
|---|---|---|---|---|
| | **PER ACRE DOSE** | | | |
| **S NO** | **Composition** | **1-A** | **1-B** | |
| Sample -7 | Zinc Phosphate + Zinc Silicate=100 gm / acre | | | |
| Sample -8 | Zinc Phosphate + Zinc Silicate=200 gm / acre | | | |
| | | **9-A** | **9-B** | **9-C** |
| Sample -9 | CS/ ZS | 50 gm | 50 gm | 125gm |
| | CP/ ZP | 50 gm | 50 gm | 75 gm |
| | Copper Octoate | 0.5 gm | 1 gm | 0.5 gm |
| | Zinc Octoate | 0.5 gm | 1 gm | 0.5 gm |
| Sample -10 | CS+CP(1:1) | | | |
| Sample -11 | Sucrose Octoate | Insect & Microbe s | | |

**Table 9**

| Table 9 discloses a composition containing pronos 1 to 3 along with other agricultural ingredients with Stevia extract. | | |
|---|---|---|
| **DORMULIN-3 VEGETATIVE WITH BIO FILM BREAKERS + STEVIA EXTRCT** | | |
| **S.NO** | **RAW MATERIAL** | **Qty/MT** |
| 1 | Pronos -1 | 100 |
| 2 | Pronos-2 | 60 |
| 3 | Pronos-3 | 40 |
| 4 | $MgSO_4.H_2O$ | 110 |
| 5 | $MnSO_4.H_2O$ | 100 |
| 6 | $FeSO_4.7H_2O$ | 50 |
| 7 | AMMONIUM MOLYBDATE | 5 |
| 8 | FULVIC ACID | 200 |
| 9 | UREA | 30 |
| 10 | Roxite | 100 |
| 11 | SOP | 100 |
| 12 | BOROVIN | 12 |
| 13 | STEVIA EXT-CHLOROFORM | 1 ML |
| 14 | STICKING AGENT(JEEMOX) | 3 |
| 15 | DISPERSANT(JEEMOL DW) | 90 |
| 16 | TOTAL WEIGHT | 1000 |

**Table 10: DORMULIN-3 FLOWERING VARIANTS**

| | | **2. stevia extract** | **3. KOH & urea** | **4. Pot.benzoate & Pot.peroxy mono sulfate** | **5. Calcium thio sulfate** |
|---|---|---|---|---|---|
| **S.NO** | **RAW MATERIAL** | Qty IN G | Qty IN G | Qty IN G | Qty IN G |
| 1 | Pronos -1 | 100 | 100 | 100 | 100 |

(continued)

| | | 2. stevia extract | 3. KOH & urea | 4. Pot.benzoate & Pot.peroxy mono sulfate | 5. Calcium thio sulfate |
|---|---|---|---|---|---|
| S.NO | RAW MATERIAL | Qty IN G | Qty IN G | Qty IN G | Qty IN G |
| 2 | Pronos-2 | 60 | 60 | 60 | 60 |
| 3 | Pronos-3 | 40 | 40 | 40 | 40 |
| 4 | Calcium ACETATE | 50 | 50 | 50 | 50 |
| 5 | AMMONIUM MOLYBDATE | 5 | 5 | 5 | 5 |
| 6 | FULVIC ACID | 250 | 250 | 250 | 250 |
| 7 | calcium propionate | 50 | 50 | 50 | 50 |
| 8 | SOP | 200 | 0 | 0 | 199 |
| 9 | KOH FLAKES | 0 | 100 | 0 | 0 |
| 10 | BOROVIN | 120 | 120 | 120 | 120 |
| 11 | UREA | 0 | 100 | 0 | 0 |
| 12 | 10 % STEVIA EXT-CHLOROFORM | 1 ML | | 1 ML | 1 ML |
| 13 | POTASSIUM BENZOATE | | | 100 | 0 |
| 14 | POTASSIUM PEROXY MONO SULFATE | | | 100 | 0 |
| 15 | CALCIUM THIOSULFATE | | | | 1 |
| 16 | STICKING AGENT(JEEMOX) | 0 | 0 | 0 | 0 |
| 17 | DISPERSANT(JEEM OL DW) | 120 | 120 | 120 | 120 |
| 18 | Jeesperse | 5 | 5 | 5 | 5 |
| | **TOTAL WEIGHT** | **1000** | **1000** | **1000** | **1000** |

## Claims

1. Organometalo composition comprising zinc octoate and copper octoate, wherein the zinc octoate and copper octoate is in a weight ratio of 1:1.

2. The organometalo composition as claimed in claim 1, wherein the composition further comprises trace metals selected from iron, manganese, magnesium, ammonium, calcium, potassium, boron, molybdenum; non-metals selected from nitrogen, phosphorous and sulphur and organic moieties selected from acetates, propionates and benzoates.

3. The organometalo composition as claimed in claim 1, further comprising compounds having antimicrobial and antioxidant property selected from the group consisting of silicates, phosphate, phosphites and benzoates of zinc and copper.

4. The organometalo composition as claimed in claim 3, wherein the composition comprises the combination of zinc and copper silicates, phosphates and octoates in the weight ratio of 5:3:2.

5. The organometalo composition as claimed in claim 3, wherein the composition comprises the combination of zinc and copper silicates, phosphites and octoates in the weight ratio of 5:3:2.

6. The organometalo composition as claimed in claim 3, wherein the composition comprises the combination of zinc and copper silicates, phosphates, phosphites and octoates in the weight ratio of 5:1.5:1.5:2.

7. The organometalo composition as claimed in claim 3, wherein the composition comprises the combination of zinc and

copper silicates, phosphates, octoates and benzoates in the weight ratio of 5:3:1:1.

8. Use of a composition according to any one of claims 1 to 7, for improving plant resistance to disorders and symptoms thereof.

**Patentansprüche**

1. Organo-Metallzusammensetzung, umfassend Zinkoctoat und Kupferoctoat, wobei das Zinkoctoat und das Kupferoctoat in einem Gewichtsverhältnis von 1:1 ist.

2. Organo-Metallzusammensetzung nach Anspruch 1, wobei die Zusammensetzung ferner Spurenelemente ausgewählt aus Eisen, Mangan, Magnesium, Ammonium, Calcium, Kalium, Bor, Molybdän; Nichtmetalle ausgewählt aus Stickstoff, Phosphor und Schwefel und organische Einheiten ausgewählt aus Acetaten, Propionaten und Benzoaten umfasst.

3. Organo-Metallzusammensetzung nach Anspruch 1, ferner umfassend Verbindungen mit antimikrobieller und antioxidativer Eigenschaft ausgewählt aus der Gruppe bestehend aus Silikaten, Phosphat, Phosphiten und Benzoaten von Zink und Kupfer.

4. Organo-Metallzusammensetzung nach Anspruch 3, wobei die Zusammensetzung die Kombination von Zink- und Kupfersilikaten, -phosphaten und -octoaten in dem Gewichtsverhältnis von 5:3:2 umfasst.

5. Organo-Metallzusammensetzung nach Anspruch 3, wobei die Zusammensetzung die Kombination von Zink- und Kupfersilikaten, -phosphiten und -octoaten in dem Gewichtsverhältnis von 5:3:2 umfasst.

6. Organo-Metallzusammensetzung nach Anspruch 3, wobei die Zusammensetzung die Kombination von Zink- und Kupfersilikaten, -phosphaten, -phosphiten und -octoaten in dem Gewichtsverhältnis von 5:1,5:1,5:2 umfasst.

7. Organo-Metallzusammensetzung nach Anspruch 3, wobei die Zusammensetzung die Kombination von Zink- und Kupfersilikaten, -phosphaten, -octoaten und -benzoaten in dem Gewichtsverhältnis von 5:3:1:1 umfasst.

8. Verwendung einer Zusammensetzung nach einem der Ansprüche 1 bis 7 zum Verbessern von Pflanzenresistenz gegen Störungen und Symptome davon.

**Revendications**

1. Composition organo-métallique comprenant de l'octoate de zinc et de l'octoate de cuivre, dans laquelle l'octoate de zinc et l'octoate de cuivre sont dans un rapport pondéral de 1:1.

2. Composition organo-métallique selon la revendication 1, dans laquelle la composition comprend en outre des métaux traces choisis parmi le fer, le manganèse, le magnésium, l'ammonium, le calcium, le potassium, le bore, le molybdène ; des non-métaux choisis parmi l'azote, le phosphore et le soufre et des fractions organiques choisies parmi les acétates, les propionates et les benzoates.

3. Composition organo-métallique selon la revendication 1, comprenant en outre des composés ayant une propriété antimicrobienne et antioxydante choisis dans le groupe constitué par les silicates, les phosphates, les phosphites et les benzoates de zinc et de cuivre.

4. Composition organo-métallique selon la revendication 3, dans laquelle la composition comprend la combinaison de silicates, phosphates et octoates de zinc et de cuivre dans le rapport pondéral de 5:3:2.

5. Composition organo-métallique selon la revendication 3, dans laquelle la composition comprend la combinaison de silicates, phosphites et octoates de zinc et de cuivre dans le rapport pondéral de 5:3:2.

6. Composition organo-métallique selon la revendication 3, dans laquelle la composition comprend la combinaison de silicates, phosphates, phosphites et octoates de zinc et de cuivre dans le rapport pondéral de 5:1,5:1,5:2.

**7.** Composition organo-métallique selon la revendication 3, dans laquelle la composition comprend la combinaison de silicates, phosphates, octoates et benzoates de zinc et de cuivre dans le rapport pondéral de 5:3:1:1.

**8.** Utilisation d'une composition selon l'une quelconque des revendications 1 à 7, pour améliorer la résistance des plantes aux maladies et à leurs symptômes.

Figure 1

**PHOTOS AFTER 24 HRS:**

**Figure 2**

**PHOTOS AFTER 48 HRS:**

**Figure 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0121377 A
- US 5000835 A
- US 2015258057 A
- WO 2016201512 A


### Non-patent literature cited in the description


- **RICHARD J. DAUM.** Agricultural and Biocidal Applications of Organometalics.. M&T Chemicals, Inc